# EUROPÄISCHE PATENTSCHRIFT

(11) **EP 0 530 563 B1**
(45) Veröffentlichungstag und Bekanntmachung des Hinweises auf die Patenterteilung: **06.11.1996**
(21) Anmeldenummer: 92113830.1
(22) Anmeldetag: 13.08.1992
(51) Int. Cl.: H01H 85/32, H01H 85/30, H01H 9/10

(54) **Niederspannungs-Schmelzsicherung**
Low-voltage guse-link
Coupe-circuit B.T. à lame de plomb

(30) Priorität: 16.08.1991 DE 4127214
(43) Veröffentlichungstag der Anmeldung: 10.03.1993
(73) Patentinhaber: Bruchmann, Klaus, D-96450 Coburg (DE)
(72) Erfinder: Bruchmann, Klaus, D-96450 Coburg (DE)
(74) Vertreter: Strehl Schübel-Hopf Groening & Partner

(56) Entgegenhaltungen:
- EP-A- 0 212 376
- DE-A- 2 551 447
- DE-A- 3 133 094
- DE-A- 3 528 914
- DE-A- 3 741 743
- DE-A- 3 802 324

## Beschreibung

Die Erfindung betrifft eine Niederspannungs-Schmelzsicherung der im Oberbegriff des Patentanspruchs 1 genannten Art. Eins derartige Sicherung mit einem blinkenden Zustandsmelder für eine Schmelzsicherung ist beispielsweise aus der DE-PS 31 33 094 bekannt.

Bei der bekannten Sicherung besteht der Zustandsmelder aus einem Ladewiderstand, einer Diode und einem Kondensator, dem eine Glimmlampe parallelgeschaltet ist. Bei dieser Anordnung ist nachteilig, daß bei abgeschaltetem Verbraucher der Zustand der Schmelzsicherung nur dann zuverlässig vom Zustandsmelder angezeigt wird, wenn auf der Verbraucherseite zwischen dem Phasenleiter und dem Erd- oder Masseleiter ein Hilfswiderstand angeordnet ist, der gewissermaßen als immer eingeschalteter künstlicher Verbraucher dient. Nur bei Vorhandensein eines solchen Hilfswiderstandes kann der für ein Blinken der Glimmlampe des Zustandsmelders erforderliche Entladestrom fließen, wenn der Verbraucher abgeschaltet ist. Dieser Hilfswiderstand hat jedoch andererseits zur Folge, daß ständig ein Leckstrom fließt. Fehlerstrom-Schutzschalter oder Isolationswächter können deshalb nur bedingt Anwendung finden.

Wegen des Hilfswiderstandes eignet sich die bekannte Sicherungseinheit auch nicht zur Nachrüstung bereits vorhandener Anlagen, da zusätzlich zu der Phasenleitung dann auch noch die Masseleitung in dasselbe Gehäuse eingebracht werden muß. Diese Masseleitung in unmittelbarer Nähe der Phasenleitung stellt dabei immer eine potentielle Gefahr für das Auftreten von Spannungsüberschlägen und dergleichen dar.

Aber auch der Hilfswiderstand selbst kann bei ungeeigneter oder fehlerhafter Ausführung zu einem Kurzschluß führen.

Der Erfindung liegt die Aufgabe zugrunde, die eingangs genannte Niederspannungs-Schmelzsicherung so auszugestalten, daß diese eine erhöhte Sicherheit aufweist und trotzdem auch bei abgeschaltetem Verbraucher zuverlässig den Sicherungszustand anzeigt.

Diese Aufgabe wird erfindungsgemäß mit den im Kennzeichen des Patentanspruchs 1 beschriebenen Merkmalen gelöst.

Bevorzugte Ausgestaltungen der Sicherung sind in den Unteransprüchen 1 bis 6 angegeben.

Erfindungsgemäß wird somit die Glimmlampe des Sicherungszustandsmelders über eine Spannungsvervielfachungsschaltung betrieben. Untersuchungen des Erfinders haben nämlich gezeigt, daß auch bei abgeschaltetem Verbraucher eine sichere Zustandsanzeige möglich ist, wenn die Glimmlampe mit einer hohen Spannung betrieben wird. Es ist dann auch kein Hilfswiderstand zwischen der Phasenleitung und der Masseleitung erforderlich, sondern es genügt bereits ein kurzes Phasenleiterstück mit einer Länge von ungefähr 10 cm, das heißt von etwa 5 bis etwa 15 cm auf der Verbraucherseite zum Abführen der geringen Energie, die zum Betreiben des Zustandsmelders erforderlich ist.

Die erfindungsgemäße Sicherung stellt daher eine zuverlässige Sicherheits-Zustandsanzeige für eine Schmelzsicherung dar, die optisch direkt wahrnehmbar ist und/oder über einen Lichtwellenleiter mit einem zugeordneten Relaisbaustein in einen Steuerstromkreis integriert bzw. mit einer Datenleittechnik verbunden werden kann, ohne daß andere Sicherheitseinrichtungen der elektrischen Anlage, wie zum Beispiel Fehlerstrom-Schutzschalter oder Isolationswächter negativ beeinflußt werden.

Als Spannungsvervielfachungsschaltung können eine Kaskadenschaltung, eine Delonschaltung, eine Villardschaltung oder eine Greinacherschaltung dienen. Diese Schaltungen sind dabei jeweils in der einfachsten Form ausführbar, da zum Betreiben einer Glimmlampe nur geringe Anforderungen zu erfüllen sind.

Die Verwendung von Graetzschaltungen, mit denen auch eine Spannungserhöhnung erreicht werden kann, bei Zustandsmeldern für Schmelzsicherungen ist zwar bekannt, beispielsweise aus der DE-PS 38 02 324, jedoch werden diese Graetzschaltungen bei den bekannten Anordnungen lediglich zu Gleichrichterzwecken eingesetzt und die Zustandsmelder nur in Verbindung mit Hilfs- oder Ableitwiderständen betrieben.

Bei der Sicherung sind zusätzlich die Begrenzungswiderstände im Zustandsmelder höchstohmig, ihre Werte liegen im Bereich.von 10 Megaohm und damit um etwa eine Zehnerpotenz höher als bei den bekannten Anordnungen. Die für bestimmte Anlagen vorgeschriebenen Hochspannungs-Isolationsprüfungen lassen sich daher durchführen, ohne daß der Zustandsmelder zu falschen Meßergebnissen führt oder unter der Prüfung leidet. Auch nimmt der erfindungsgemäße Zustandsmelder keinen Schaden durch auslaufende Stirnwellen, die bei Gewittern in Freileitungen verursacht werden.

Obwohl der Zustandsmelder höchstohmig ist, kommt er doch mit den sehr geringen, stets natürlich vorhandenen Netzimpedanzen wie zum Beispiel der kapazitiven Leitungsimpedanz des verbraucherseitigen Phasenleiterstückes als Energiequelle aus, da die Energie in einem Kondensator gesammelt und in Lichtimpulse umgesetzt wird.

Ein besonderer Vorteil der erfindungsgemäßen Sicherung ist es, auch in bestehenden Anlagen ohne weiteres eingesetzt werden zu können, da keinerlei zusätzliche Installationen für Hilfswiderstände und dergleichen vorzunehmen sind. Es reicht aus, einen alten Sicherungsstecker mit der Schmelzsicherung gegen einen neuen Stecker mit einem eingebauten Zustandsmelder auszutauschen.

Ausführungsbeispiele der Erfindung werden im folgenden anhand der Zeichnung näher erläutert. Es zeigen:
- Fig. 1: ein Schaltbild für eine erste Ausführungsform einer Sicherung, die als Sicherungsstecker vorgesehen ist;
- Fig. 2: ein Schaltbild für eine alternative zweite Ausführungsform der Sicherung; und
- Fig. 3: die Gesamtansicht eines Sicherungssteckers.

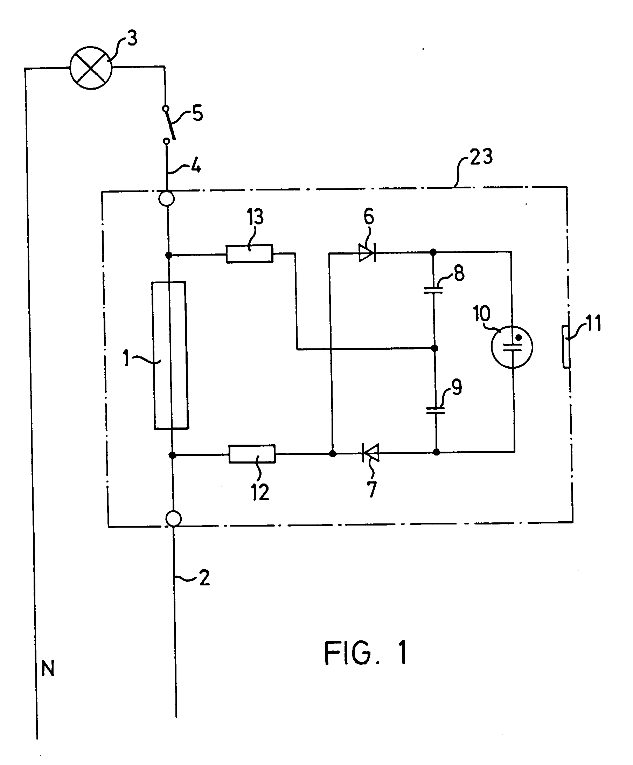

Die Fig. 1 zeigt die Schaltung eines ersten Ausführungsbeispiels für einen Zustandsmelder für einen Sicherungsstecker, der in einen Sicherungsschalter einsetzbar ist. Eine Schmelzsicherung (Sicherungspatrone) 1 ist zwischen dem von einem Versorgungsnetz herkommenden Teil 2 einer Phasenleitung und dem zu einem Verbraucher 3 führenden Teil 4 der Phasenleitung geschaltet. Der Verbraucher 3 kann durch einen Schalter 5, der sich im Teil 4 der Phasenleitung befindet, vom Netz getrennt werden.

Parallel zur Schmelzsicherung 1 liegt in einem gemeinsamen Gehäuse 23, das strichpunktiert angedeutet ist, die Schaltung für den Zustandsmelder, der optisch den Zustand der Schmelzsicherung 1 anzeigt. Der Zustandsmelder weist eine Spannungsvervielfachungsschaltung auf, die aus Dioden 6 und 7 sowie Kondensatoren 8 und 9 in vereinfachter Delonschaltung aufgebaut ist. Die beiden Kondensatoren haben jeweils einen Wert von 0,1 µF. Parallel zu den Kondensatoren 8 und 9 ist eine Glimmlampe 10 angeordnet, die blinkt, wenn die Sicherung 1 angesprochen hat. Die Glimmlampe 10 ist hinter einem Fenster 11 im Gehäuse 23 angeordnet. Das Fenster erhöht dabei nicht nur die Sicherheit gegen versehentliches Berühren spannungsführender Teile, sondern kann auch die von der Glimmlampe ausgehende Strahlung bündeln oder streuen, je nach Bedarf und Ausführung. Die Spannungsvervielfachungsschaltung mit der Glimmlampe ist einerseits über einen ersten höchstohmigen Sicherheits-Widerstand 12 mit einem Wert von 10 Megaohm an den Teil 2 der Phasenleitung, der vom Netz kommt, und andererseits über einen zweiten höchstohmigen Sicherheits-Widerstand 13 mit einem Wert von ebenfalls 10 Megaohm an den Teil 3 der Phasenleitung angeschlossen, der über den Schalter 5 zum Verbraucher 3 führt.

Im einzelnen sind zur Spannungsvervielfachung die Dioden 6 und 7 parallel, jedoch mit entgegengesetzten Durchlaßrichtungen, an den ersten Begrenzungswiderstand 12 angeschlossen. Die Ausgänge der Dioden sind über die hintereinander angeordneten Kondensatoren 8 und 9 verbunden. Wie bereits erwähnt, liegt die Glimmlampe 10 parallel zu den beiden Kondensatoren 8 und 9 an den Ausgängen der Dioden 6 und 7.

Zwischen den beiden Kondensatoren 8 und 9, das heißt an der Verbindungsstelle dieser beiden Kondensatoren ist der zweite Begrenzungswiderstand 13 angeschlossen.

Statt der Glimmlampe 10 läßt sich auch eine Leuchtdiode verwenden, die mit einer Triggerdiode in Reihe geschaltet ist. Auch kann das Licht der Glimmlampe (bzw. Leuchtdiode) über einen Lichtwellenleiter weitergeleitet werden.

Mit der beschriebenen Schaltung werden beide Halbwellen der Netz-Wechselspannung ausgenutzt, und es wird eine Verdoppelung der an der Sicherung 1 anliegenden Netzspannung erreicht. Bei einer Glimmlampen-Zündspannung von 100 V reicht somit bereits eine Versorgungsspannung von 50 V aus, um den Zustandsmelder zu betreiben. Da die Spannungsvervielfachungsschaltung auf eine Vervierfachung usw. der anliegenden Spannung erweitert werden kann, lassen sich damit alle gewünschten Netzspannungen erfassen.

Im Falle des Ansprechens der Sicherung 1, das heißt wenn der Leiter der Schmelzsicherung durchschmilzt, sind die beiden Anschlüsse des Zustandsmelders nicht mehr durch diesen Leiter kurzgeschlossen. Auch wenn der Verbraucher 3 abgeschaltet ist, das heißt wenn der Schalter 5 geöffnet ist, strahlt der auf Wechselspannnungspotential liegende Teil 4 der Phasenleitung genügend Energie ab, um aufgrund der Spannungsvervielfachung an der Glimmlampe 10 eine derart hohe Spannung zu erzeugen, die zum Zünden der Glimmlampe ausreicht. Es genügt dabei, wenn der Teil 4 der Phasenleitung zwischen der Sicherung und dem Schalter 5 etwa 10 cm lang ist, so daß dieser Effekt auch bereits dann auftritt, wenn unmittelbar nach der Sicherung ein Schütz oder dergleichen zum Abschalten des Verbrauchers 3 vorgesehen ist.

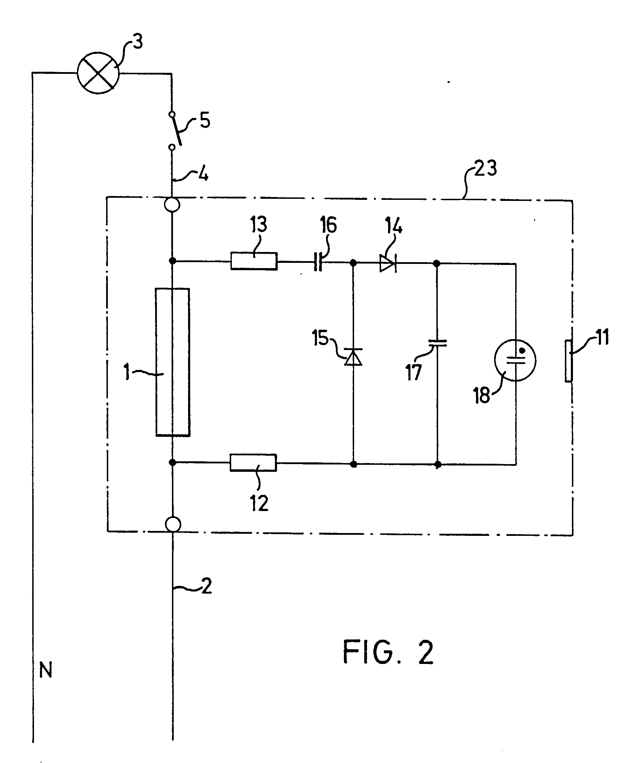

Die Fig. 2 zeigt eine alternative Schaltung für den Zustandsmelder, der wie die ersten Ausführungsform eine Schmelzsicherung 1 und Begrenzungswiderstände 12 und 13 mit Werten von jeweils 10 Megaohm aufweist. Die Dioden 14, 15 und die Kondensatoren 16, 17 (Wert je 0,1 µF) dieser Schaltung sind jedoch in der Form einer vereinfachten Villard- bzw. Kaskaden- oder Siemensschaltung angeordnet. Das heißt, daß die Ausgänge der beiden Begrenzungswiderstände 12 und 13 hier über eine Reihenschaltung aus der Diode 15 und dem Kondensator 16 verbunden sind. Parallel zur Diode 15 liegt eine Reihenschaltung aus der Diode 14 und dem Kondensator 17. Wiederum parallel zum Kondensator 17 ist die Glimmlampe 18 vorgesehen.

Dadurch wird bewirkt, daß der Kondensator 16 während der negativen Halbwelle der Wechselspannung aufgeladen wird. Anschließend erfolgt die Ladung des Kondensators 17 durch die positive Halbwelie, so daß sich die Spannungen addieren.

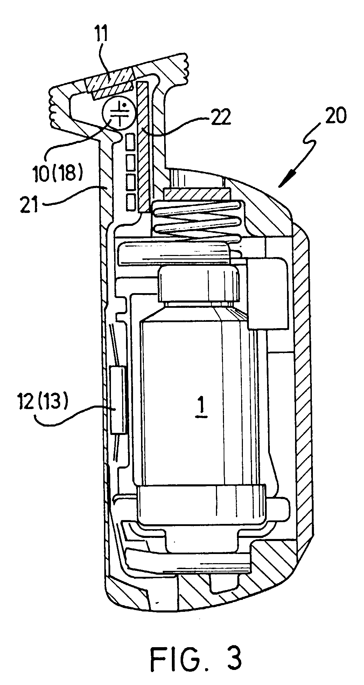

Die Fig. 3 zeigt einen Sicherungsstecker 20 zur Aufnahme der Schmelzsicherung 1, wie er in üblichen Sicherungsschaltern Verwendung findet. In solchen Sicherungsschaltern, die beispielsweise in der DE-OS 37 41 743 beschrieben sind, dient der Sicherungsstecker 20 nicht nur zur Absicherung der Verbraucherseite gegen Kurzschlüsse, sondern auch zum Trennen der Verbraucherseite vom Netz, wie es etwa bei Arbeiten an der elektrischen Installation erforderlich ist. Dazu läßt sich der Sicherungsstecker 20, wenn er in das Gehäuse des Sicherungsschalters eingeführt ist, aus einer Einschaltstellung in eine Ausschaltstellung kippen.

Der Sicherungsstecker weist einen Betätigungsgriff 21 auf, an dessen vorderem, sichtbaren Ende die Glimmlampe 10 bzw. 18 hinter dem Fenster 11 eingebaut ist. Die übrige elektrische Schaltung des zustandsmelders, das heißt die Dioden 6 und 7 bzw. 14 und 15, die Kondensatoren 8 und 9 bzw. 16 und 17 sowie einer der Begrenzungswiderstände 12 und 13 befinden sich auf einer Schaltplatine 22, die im Betätigung des Sicherungssteckers untergebracht ist. Der andere Begrenzungswiderstand 13 bzw. 12 ist in der Nähe des zweiten Anschlusses der Schaltplatine an die Phasenleitung vorgesehen, um die Gefahr von Spannungsüberschlägen zu verringern. Die äußere Form des Sicherungssteckers mit dem Zustandsmelder entspricht exakt derjenigen der ohne Zustandsmelder, so daß sich Sicherungsstecker mit Zustandsmeldern auch in bereits bestehenden Anlagen ohne weiteres gegen Sicherungsstecker ohne Zustandsmelder austauschen lassen. Dazu sind insbesondere keine Arbeiten an der Verdrahtung und den Anschlüssen des Sicherungsschalters erforderlich, da keine Hilfswiderstände oder dergleichen einzubauen sind.

Der Zustandsmelder kann auch in einem Sockel für die Schmelzsicherung, einer Schraubkappe für die Schmelzsicherung, dem Gehäuse des oben erwähnten Sicherungsschalters, im Griff eines NH-Trenners und dergleichen vorgesehen werden. Wenn der Zustandsmelder im Gehäuse des Sicherungsschalters eingebaut wird, wird vorteilhaft zur Vermeidung von Fehlanzeigen dem Zustandsmelder ein Schalter derart zugeordnet, daß dieser mit dem eigentlichen Lastschalter zwangsgekoppelt ist.

Der beschriebene Zustandsmelder für Schmelzsicherungen weist damit folgende Merkmale auf, die insbesondere der Sicherheit dienen:

Durch die Spannungsvervielfachung wird die Zuverlässigkeit dadurch erhöht, daß geringe, immer vorhandene Energiemengen vollständig ausgenutzt werden, ohne daß Lastwiderstände benötigt werden.

Es sind höchstohmige Sicherheitswiderstände in Reihe mit dem Zustandsmelder vorgesehen, die für sich selbst jeweils kleine Sicherungen bilden und im Falle eines Überspannungsdurchschlages einen Wert von Unendlich annehmen, das heißt gemeinsam mit der abgeschalteten Sicherung in solch einem Notfall eine Isolationsstrecke bilden.

Das gemeinsame Gehäuse ermöglicht eine feste Verdrahtung und erhöht den Sicherheitspegel.

Das Fenster für die Glimmlampe verhindert im Fehlerfall das Berühren spannungsführender Teile.

## Patentansprüche

1. Niederspannungs-Schmelzsicherung mit einer Schmelzsicherungspatrone (1) und mit einem Sicherungszustandsmelder mit Dioden (6, 7; 14, 15), Kondensatoren (8, 9; 16, 17) und einer Glimmlampe (10; 18) sowie vorgeschalteten Begrenzungs-widerständen (12, 13), der parallel zu der Schmelzsicherungspatrone (1) angeordnet ist und ein Ansprechen der Schmelzsicherung durch Blinken der Glimmlampe anzeigt; dadurch **gekennzeichnet**, daß die Dioden (6, 7; 14, 15) und Kondensatoren (8, 9; 16, 17) des Zustandsmelders in der Form einer Spannungsvervielfachungsschaltung verbunden sind, an die die Glimmlampe (10; 18) angeschlossen ist.

2. Sicherung nach Anspruch 1, dadurch gekennzeichnet, daß die Spannungsvervielfachungsschaltung eine Kaskaden-, eine Delon-, eine Villard- oder eine Greinacherschaltung darstellt.

3. Sicherung nach Anspruch 1, dadurch gekennzeichnet, daß der Zustandsmelder und die Schmelzsicherungspatrone (1) in einem gemeinsamen Gehäuse (6) untergebracht sind.

4. Sicherung nach Anspruch 1, dadurch gekennzeichnet, daß die Sicherung einen Sicherungsstecker (20) und ein Gehäuse für einen Sicherungsschalter umfaßt, und daß der Zustandsmelder vollständig im Sicherungsstecker untergebracht ist.

5. Sicherung nach Anspruch 1, dadurch gekennzeichnet, daß die Sicherung einen Sicherungsstecker (20) und ein Gehäuse für einen Sicherungsschalter umfaßt, und daß der Zustandsmelder vollständig im Gehäuse des Sicherungsschalters untergebracht ist.

6. Sicherung nach Anspruch 5, dadurch gekennzeichnet, daß für den Zustandsmelder ein Schalter vorgesehen ist, der mit den Schaltstellungen des Sicherungsschalters gekoppelt ist.

## Claims

1. Low voltage fuse with a fuse cartridge (1) and with a fuse condition indicator with diodes (6, 7; 14, 15), capacitors (8, 9; 16, 17) and a fluorescent lamp (10; 18) and limiting resistors (12, 13) connected in front of it which is arranged in parallel with the fuse cartridge (1) and indicates cutting out of the fuse by blinking of the fluorescent lamp; characterised in that the diodes (6, 7; 14, 15) and capacitors (8,9; 16,17) of the condition indicator are connected in the form of a voltage multiplier circuit to which the fluorescent lamp (10; 18) is connected.

2. Fuse as claimed in Claim 1, characterised in that the voltage multiplier circuit constitutes a cascade, a Delon, a Villard or a Greinacher circuit.

3. Fuse as claimed in Claim 1, characterised in that the condition indicator and the fuse cartridge (1) are accommodated in a common housing (6).

4. Fuse as claimed in Claim 1, characterised in that the fuse includes a fuse plug (20) and a housing for a fused switch and that the condition indicator is completely accommodated in the fuse plug.

5. Fuse as claimed in Claim 1, characterised in that the fuse includes a fuse plug (20) and a housing for a fused switch and that the condition indicator is completely accommodated in the housing of the fused switch.

6. Fuse as claimed in Claim 5, characterised in that provided for the condition indicator there is a switch which is coupled to the switch positions of the fused switch.

## Revendications

1. Coupe-circuit basse tension comportant une cartouche fusible (1) et un témoin d'état du fusible comportant des diodes (6,7;14,15), des condensateurs (8,9;16, 17) et une lampe fluorescente (10;18) ainsi que des résistances de limitation (12,13) branchées en amont, et qui est branché en parallèle avec la cartouche fusible (1) et indique une réponse du fusible par clignotement de la lampe luminescente; caractérisé en ce que les diodes (6,7;14,15) et le condenseur (8,9;16,17) du témoin d'état du fusible sont réunis sous la forme d'un circuit multiplicateur de tension, auquel est raccordé la lampe fluorescente (10;18).

2. Coupe-circuit selon la revendication 1, caractérisé en ce que le circuit multiplicateur de tension est un circuit en cascade, un circuit Delon, un circuit Villard ou un circuit Greinacher.

3. Coupe-circuit selon la revendication 1, caractérisé en ce que le témoin d'état du fusible et la cartouche fusible (1) sont logés dans un boîtier commun (6).

4. Coupe-circuit selon la revendication 1, caractérisé en ce que le coupe-circuit possède un connecteur (20) et un boîtier pour un interrupteur de sécurité, et que le témoin d'état du fusible est entièrement logé dans le connecteur du coupe-circuit.

5. Coupe-circuit selon la revendication 1, caractérisé en ce que le coupe-circuit comprend un connecteur (20) et un boîtier pour un interrupteur de sécurité, et que le témoin d'état du fusible est logé complètement dans le boîtier de l'interrupteur de sécurité.

6. Coupe-circuit selon la revendication 5, caractérisé en ce que pour le témoin d'état du fusible il est prévu un commutateur qui est couplé aux positions de commutation de l'interrupteur de sécurité.
